(19) Europäisches Patentamt
European Patent Office
Office européen des brevets

(11) **EP 3 803 454 B1**

(12) **EUROPÄISCHE PATENTSCHRIFT**

(45) Veröffentlichungstag und Bekanntmachung des Hinweises auf die Patenterteilung:
**06.09.2023** **Patentblatt 2023/36**

(21) Anmeldenummer: **19719869.0**

(22) Anmeldetag: **25.04.2019**

(51) Internationale Patentklassifikation (IPC):
**G01S 13/90** (2006.01)   **G01S 7/40** (2006.01)

(52) Gemeinsame Patentklassifikation (CPC):
**G01S 13/9056; G01S 7/4026; G01S 7/4034**

(86) Internationale Anmeldenummer:
**PCT/EP2019/060608**

(87) Internationale Veröffentlichungsnummer:
**WO 2019/228716 (05.12.2019 Gazette 2019/49)**

(54) **SYNTHETIK-APERTUR-RADARVERFAHREN UND SYNTHETIK-APERTUR-RADARVORRICHTUNG**

SYNTHETIC-APERTURE RADAR METHOD AND SYNTHETIC-APERTURE RADAR DEVICE

PROCÉDÉ RADAR À OUVERTURE SYNTHETIQUE ET DISPOSITIF RADAR À OUVERTURE SYNTHETIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.05.2018   DE 102018208366**

(43) Veröffentlichungstag der Anmeldung:
**14.04.2021   Patentblatt 2021/15**

(73) Patentinhaber: **Deutsches Zentrum für Luft- und Raumfahrt e.V.**
**53227 Bonn (DE)**

(72) Erfinder:
- **KRIEGER, Gerhard**
  **82131 Gauting (DE)**
- **HUBER, Sigurd**
  **80636 München (DE)**
- **KLENK, Patrick**
  **82110 Germering (DE)**
- **MOREIRA, Alberto**
  **82140 Olching (DE)**
- **QUEIROZ DE ALMEIDA, Felipe**
  **81241 München (DE)**
- **REIMANN, Jens**
  **82110 Germering (DE)**
- **VILLANO, Michelangelo**
  **82205 Gilching (DE)**
- **YOUNIS, Marwan**
  **82234 Weßling (DE)**

(74) Vertreter: **Fink Numrich**
**Patentanwälte PartmbB**
**Paul-Gerhardt-Allee 24**
**81245 München (DE)**

(56) Entgegenhaltungen:
- **KRIEGER G ET AL: "CEBRAS: Cross elevation beam range ambiguity suppression for high-resolution wide-swath and MIMO-SAR imaging", 2015 IEEE INTERNATIONAL GEOSCIENCE AND REMOTE SENSING SYMPOSIUM (IGARSS), IEEE, 26. Juli 2015 (2015-07-26), Seiten 196-199, XP032805989, DOI: 10.1109/IGARSS.2015.7325733 [gefunden am 2015-11-10]**
- **VILLANO MICHELANGELO ET AL: "Staggered SAR: Performance Analysis and Experiments With Real Data", IEEE TRANSACTIONS ON GEOSCIENCE AND REMOTE SENSING, IEEE SERVICE CENTER, PISCATAWAY, NJ, US, Bd. 55, Nr. 11, 1. November 2017 (2017-11-01), Seiten 6617-6638, XP011671875, ISSN: 0196-2892, DOI: 10.1109/TGRS.2017.2731047 [gefunden am 2017-10-25]**
- **GERHARD KRIEGER ET AL: "Advanced synthetic aperture radar based on digital beamforming and waveform diversity", RADAR CONFERENCE, 2008. RADAR '08. IEEE, IEEE, PISCATAWAY, NJ, USA, 26. Mai 2008 (2008-05-26), Seiten 1-6, XP031376223, ISBN: 978-1-4244-1538-0**

- **DE ALMEIDA FELIPE QUEIROZ ET AL: "Multichannel staggered SAR with reflector antennas: Discussion and proof of concept", 2017 18TH INTERNATIONAL RADAR SYMPOSIUM (IRS), GERMAN INSTITUTE OF NAVIGATION-DGON, 28. Juni 2017 (2017-06-28), Seiten 1-10, XP033142234, DOI: 10.23919/IRS.2017.8008162 [gefunden am 2017-08-10]**

- **DE ALMEIDA FELIPE QUEIROZ ET AL: "Multichannel staggered SAR with reflector antennas: Discussion and proof of concept",**

**Beschreibung**

Die Erfindung betrifft ein Synthetik-Apertur-Radarverfahren zur Fernerkundung der Erdoberfläche sowie eine entsprechende Synthetik-Apertur-Radarvorrichtung.

Synthetik-Apertur-Radarverfahren, welche auch als SAR-Verfahren bezeichnet werden, ermöglichen die Fernerkundung der Erdoberfläche über die Erfassung von an der Erdoberfläche reflektierten Radarpulsen, die von einer Radareinrichtung ausgesendet werden, welche sich mit konstanter Geschwindigkeit über der Erdoberfläche in einer sog. Azimut-Richtung bewegt. Der Begriff der Erdoberfläche ist dabei weit zu verstehen und kann gegebenenfalls auch die Oberfläche eines anderen Himmelskörpers (vorzugsweise eines anderen Planeten) als der Erde betreffen.

Bei SAR-Radarverfahren macht man sich die Erkenntnis zunutze, dass aufgrund der bewegten Radareinrichtung die gleichen Bereiche der Erde bzw. eines Himmelskörpers in unterschiedlichen Positionen erfasst werden, wodurch eine Amplituden- und Phaseninformation und schließlich ein Radarbild der Erdoberfläche erhalten werden kann. Es wird somit eine synthetische Apertur in Azimut-Richtung erzeugt.

Die mit einem SAR-System empfangenen Radarechos werden in digitale SAR-Rohdaten gewandelt, welche für eine Vielzahl der ausgesendeten Radarpulse, die mit entsprechenden Azimut-Positionen korrelieren, jeweils Datenabtastungen für eine Vielzahl von sog. Range-Positionen enthalten, welche unterschiedliche Abstände zwischen der Erdoberfläche und der Azimut-Richtung repräsentieren und demzufolge Radarechos aus unterschiedlichen Richtungen darstellen. Die Range-Positionen können als sog. Slant-Range (schräge Entfernung) oder als sog. Ground-Range (Bodenentfernung) angegeben werden. Die Slant-Range entspricht dabei dem Abstand der Radareinrichtung von der Erdoberfläche in der Richtung, aus welcher ein Radarecho empfangen wird. Die Ground-Range korrespondiert mit der Projektion der Slant-Range auf die Erdoberfläche. Beide Größen können ineinander umgerechnet werden.

Um die Erfassung eines breiten Streifens der Erdoberfläche mit guter Azimut-Auflösung zu gewährleisten, sind aus dem Stand der Technik sog. Multi-Beam-SAR-Systeme bekannt. Diese Systeme umfassen als Radareinrichtung eine planare Antenne mit einer Vielzahl von Antennenelementen oder eine Reflektorantenne mit einem Array von Speise-Antennenelementen (auch als Feed-Array bezeichnet). Auf diese Weise können Radarechos unterschiedlicher Radarpulse, die gleichzeitig aus verschiedenen Richtungen von der Erdoberfläche empfangen werden, separiert werden. Hierzu wird digitale Strahlformung in Elevation (d.h. seitlich schräg nach unten mit ca. 90° zur Flugrichtung) genutzt. Mittels dieser digitalen Strahlformung werden mit mehreren Empfangs-Strahlungskeulen bzw. Beams die Radarechos von unterschiedlichen Pulsen aufgezeichnet. Die digitale Strahlformung wird nach Digitalisierung der empfangenen Radarechos durchgeführt und liefert die eingangs erwähnten SAR-Rohdaten.

Um qualitativ hochwertige Bilder der Erdoberfläche zu ermitteln, müssen SAR-Radarsysteme bzw. deren Radareinrichtungen geeignet kalibriert werden. Dies ist vor allem für die oben beschriebenen Multi-Beam-SAR-Systeme erforderlich, um sicherzustellen, dass durch die digitale Strahlformung auch tatsächlich Beams erhalten werden, die möglichst nur das Radarecho eines einzelnen Radarpulses erfassen. Zur geeigneten Kalibrierung von SAR-Radarsystemen ist eine umfassende Charakterisierung des Fernfelds der verwendeten Antennensysteme erforderlich. Eine Vermessung des Fernfelds am Boden ist oftmals nicht möglich, denn es werden vermehrt SAR-Radarsysteme mit großen Radarwellenlängen eingesetzt, was zu großen Abmessungen der Antennensysteme führt. Dies gilt im Besonderen für Reflektorsysteme, deren Reflektor erst im All entfaltet wird.

Aus dem Stand der Technik ist es ferner bekannt, die Kalibrierung von SAR-Radarsystemen im Orbit unter Verwendung von dedizierten Kalibrationszielen am Boden, wie z.B. Winkelreflektoren oder Transpondern, durchzuführen. Hierfür wird jedoch eine sehr große Anzahl an Kalibrationszielen benötigt, um die Form des von dem Antennensystem emittierten elektrischen Fernfelds ausreichend genau zu charakterisieren. Deshalb ist diese Kalibrationsmethode oftmals nicht praktikabel.

Darüber hinaus ist es bekannt, das Fernfeld von SAR-Antennensystemen über ein geeignetes Antennenmodell zu beschreiben, ohne explizit Kalibrationsmessungen durchzuführen. Hierfür werden jedoch hochgenaue Informationen zur Fluglage und Form von Komponenten des Antennensystems (wie z.B. eines Reflektors) im All benötigt, die oftmals nicht zur Verfügung stehen.

Die Druckschrift Krieger et al.: "CEBRAS: Cross elevation beam range ambiguity suppression for high-resolution wide-swath and MIMO-SAR imaging", International Geoscience and Remote Sensing Symposium, 26. Juli 2015, Seiten 196-199, offenbart ein Verfahren zur verbesserten Unterdrückung von Range-Mehrdeutigkeiten in einem SAR-System mit mehreren Strahlungskeulen in Elevation. Dabei wird in Echtzeit auf dem Satelliten, der gleichzeitig mehrere Radarechos aus unterschiedlichen Richtungen empfängt, eine konventionelle digitale Strahlformung mit mehreren Antennenkeulen durchgeführt und anschließend werden verbleibende Range-Mehrdeutigkeiten in einem Nachverarbeitungsschritt am Boden aus den durch die digitale Strahlformung gewonnenen Signalen entfernt. Darüber hinaus wird in dieser Druckschrift ein speziell hierauf abgestimmter Kalibriermodus beschrieben, bei dem die digitale Strahlformung auf dem Satelliten unverändert mit mehreren in Echtzeit gesteuerten Antennenkeulen durchgeführt wird, die Pulswiederholrate beim Senden jedoch soweit reduziert wird, dass keine Mehrdeutigkeiten entstehen.

Aufgabe der Erfindung ist es, ein Synthetik-Apertur-Radarverfahren und eine Synthetik-Apertur-Radarvorrichtung zu schaffen, welche eine einfache Kalibrierung der verwendeten Radareinrichtung im Orbit ermöglichen.

Diese Aufgabe wird durch das Verfahren gemäß Patentanspruch 1 bzw. die Vorrichtung gemäß Patentanspruch 12 gelöst. Weiterbildungen der Erfindung sind in den abhängigen Ansprüchen definiert.

Das erfindungsgemäße Synthetik-Apertur-Radarverfahren dient zur Fernerkundung der Erdoberfläche über eine Radareinrichtung auf einem Flugobjekt, das sich in eine Azimut-Richtung über der Erdoberfläche bewegt, wobei die Radareinrichtung ein Array aus Antennenelementen umfasst, um im Sendebetrieb Radarpulse auszusenden und im Empfangsbetrieb die an der Erdoberfläche reflektierten Radarechos dieser Radarpulse zu empfangen. Die Antennendiagramme der jeweiligen Antennenelemente beschreiben sowohl das Aussenden als auch den Empfang von Radarstrahlung. Die Radareinrichtung ist dabei derart ausgestaltet, dass in einem SAR-Normalbetriebsmodus, in dem SAR-Bilder gewonnen werden, gleichzeitig mehrere Radarechos von unterschiedlichen Radarpulsen empfangen werden und über digitale Strahlformung voneinander getrennt werden. Die Radareinrichtung umfasst somit neben den Antennenelementen auch eine Verarbeitungseinrichtung, um digitale Strahlformung durchzuführen. Aus den durch die digitale Strahlformung erhaltenen Daten werden im SAR-Normalbetriebsmodus schließlich SAR-Bilder gewonnen, wobei die Berechnung von SAR-Bildern nicht unbedingt durch die in der Radareinrichtung enthaltene Verarbeitungseinrichtung durchgeführt werden muss, sondern ggf. auch auf einer Bodenstation auf der Erdoberfläche stattfinden kann. Im letzteren Fall werden die durch die digitale Strahlformung erhaltenen Daten zur Weiterverarbeitung an die Bodenstation übertragen.

Erfindungsgemäß wird mit dem Synthetik-Apertur-Radarverfahren ein Kalibriermodus durchgeführt, der sich vom obigen SAR-Normalbetriebsmodus unterscheidet. In diesem Kalibriermodus erfolgt das Aussenden der Radarpulse im Sendebetrieb mit einer vorgegebenen (konstanten) Pulswiederholrate derart, dass von allen Antennenelementen des Arrays zum gleichen Zeitpunkt im Empfangsbetrieb immer nur Echosignale eines einzelnen Radarechos empfangen werden. Es kommen somit zu einem entsprechenden Empfangszeitpunkt nie Radarechos von unterschiedlichen Radarpulsen am Array an. Vorzugsweise ist ein Antennenelement ein einzelner Antennenstrahler. Jedoch kann ein Antennenelement gegebenenfalls auch aus mehreren Antennenstrahlern gebildet werden, sofern diese fest miteinander verdrahtet sind und nicht separat angesteuert werden können. Als Radareinrichtung wird in einer bevorzugten Variante eine Reflektorantenne verwendet, welche einen parabolischen Reflektor sowie ein Array aus Speise-Antennenelementen umfasst. Nichtsdestotrotz ist die Erfindung auch für eine planare Antenne einsetzbar, welche eine Vielzahl von Antennenelementen in einem planaren Array umfasst.

Im Empfangsbetrieb des erfindungsgemäßen Kalibriermodus werden die Echosignale in mehreren Empfangskanälen aufgezeichnet, wobei einem jeweiligen Empfangskanal ein unterschiedliches Antennenelement zugeordnet ist und vorzugsweise für jedes Antennenelement ein Empfangskanal vorliegt (d.h. jedes Antennenelement wird zum Empfang von Radarstrahlung aktiviert). Im jeweiligen Empfangskanal werden die durch das zugeordnete Antennenelement empfangenen Echosignale digitalisiert und unabhängig von den anderen Empfangskanälen direkt, d.h. ohne Zwischenschaltung von digitaler Strahlformung, gespeichert, wodurch digitalisierte Radardaten für jeden Empfangskanal erhalten werden. Es werden somit transparent für die jeweiligen Antennenelemente die ankommenden Radarechos erfasst. Der obige Begriff der Speicherung ist dabei derart zu verstehen, dass die digitalisierten Radardaten zur Weiterverarbeitung durch andere Datenverarbeitungsverfahren zur Verfügung stehen. Es handelt sich somit nicht um eine kurzzeitige Speicherung innerhalb des Signalflusses einer Datenverarbeitung.

Die digitalisierten Radardaten der jeweiligen Empfangskanäle werden anschließend weiterverarbeitet, um einen Satz von kalibrierten Parametern der Radareinrichtung für den oben definierten SAR-Normalbetriebsmodus zu ermitteln, d.h. für einen SAR-Betriebsmodus, der nicht dem Zweck der Kalibrierung dient. Der Satz von kalibrierten Parametern umfasst Koeffizienten zur Kombination von empfangenen Echosignalen der einzelnen Antennenelemente bei der digitalen Strahlformung in dem SAR-Normalbetriebsmodus zur Gewinnung von SAR-Bildern. Es werden somit durch die Kalibrierung geeignete Koeffizienten für die spätere digitale Strahlformung ermittelt, die mit der Radareinrichtung durchgeführt wird.

Das erfindungsgemäße Verfahren beruht auf der Erkenntnis, dass die transparente Erfassung von Radarsignalen durch einzelne Antennenelemente ohne digitale Strahlformung und ohne Range-Mehrdeutigkeiten eine Gewinnung von kalibrierten Parametern ermöglicht, ohne dass dediziert Kalibrationsziele auf der Erdoberfläche vorgesehen sein müssen. Im Besonderen können mit dem erfindungsgemäßen Verfahren Informationen zu den relativen Antennendiagrammen der einzelnen Antennenelemente abgeleitet werden und zur Kalibrierung genutzt werden.

In einer Variante des erfindungsgemäßen Verfahrens senden im Sendebetrieb alle Antennenelemente des Arrays gleichzeitig Radarstrahlung mit der vorgegebenen Pulswiederholrate aus, wobei die vorgegebene Pulswiederholrate gegenüber der Pulswiederholrate des SAR-Normalbetriebsmodus verkleinert ist, so dass Radarechos unterschiedlicher Radarpulse nie gleichzeitig an dem Array ankommen. Hierdurch wird durch eine kleine Pulswiederholrate sichergestellt, dass immer nur ein einzelnes Radarecho im Empfangsbetrieb empfangen wird. Vorzugsweise wird bei dieser Variante der Erfindung im Kalibriermodus nur die Pulswiederholrate im Vergleich zum SAR-Normalbetriebsmodus verändert, wohingegen die Abstrahlcharakteristika der Radareinrichtung im Vergleich zum SAR-Normalbetriebsmodus unverändert bleiben.

In einer weiteren Variante wird zu jedem Sendezeitpunkt Radarstrahlung über die Radareinrichtung auf einen gegenüber dem SAR-Normalbetriebsmodus verkleinerten Bereich der Erdoberfläche gerichtet, so dass Radarechos unterschiedlicher Radarpulse nie gleichzeitig an dem Array von Antennenelementen ankommen. Diese Variante hat den Vorteil, dass eine höhere Pulswiederholrate genutzt werden kann, wodurch Azimut-Mehrdeutigkeiten in den empfangenen Radarechos vermieden werden. Im Falle, dass das Array aus Antennenelementen Bestandteil einer Reflektorantenne ist, wird die Ausleuchtung des verkleinerten Bereichs der Erdoberfläche vorzugsweise dadurch erreicht, dass nur eine Teilmenge der Antennenelemente des Arrays Radarstrahlung aussendet. Im Falle, dass das Array aus Antennenelementen ein planares Array ist, wird das Ausleuchten des verkleinerten Bereichs vorzugsweise durch eine geeignete Einstellung des Phasenversatzes zwischen den Antennenelementen erreicht. Gegebenenfalls kann für ein planares Array der verkleinerte Bereich auch dadurch erreicht werden, dass mit mehr Antennenelementen als im SAR-Normalbetriebsmodus Radarstrahlung ausgesendet wird, was zu einer größeren Apertur und somit zu einer schmaleren Strahlungskeule führt. Vorzugsweise werden bei der soeben beschriebenen Variante der Erfindung im Kalibriermodus nur die Abstrahlcharakteristika der Radareinrichtung im Vergleich zum SAR-Normalbetriebsmodus verändert, wohingegen die Pulswiederholrate im Vergleich zum SAR-Normalbetriebsmodus unverändert bleibt.

In einer weiteren Variante des erfindungsgemäßen Verfahrens werden im Rahmen der Weiterverarbeitung die digitalisierten Radardaten jedes Empfangskanals für das Radarecho eines jeweiligen Radarpulses einer Range-Kompression unterzogen, wodurch für den jeweiligen Radarpuls mehrere digitale Radarsignale erhalten werden, wobei für das entsprechende Radarecho zumindest ein digitales Radarsignal für eine jeweilige Range-Position aus einer Vielzahl von Range-Positionen vorliegt. Mehrere digitale Radarsignale für eine jeweilige Range-Position werden dabei dann erhalten, wenn zusätzlich zur Range-Kompression auch eine Zerlegung im Dopplerfrequenz-Spektrum des Radarechos durchgeführt wird, wie weiter unten erläutert wird. Die Range-Positionen stellen in an sich bekannter Weise Positionen in der senkrecht zur Azimut-Richtung verlaufenden Range-Richtung dar.

In einer bevorzugten Variante der soeben beschriebenen Ausführungsform werden die digitalisierten Radardaten eines jeweiligen Empfangskanals für das Radarecho eines jeweiligen Radarpulses einer Range-Kompression unterzogen, ohne dass ferner eine Frequenzzerlegung der digitalisierten Radardaten im Dopplerfrequenz-Spektrum des Radarechos erfolgt, wobei das Dopplerfrequenz-Spektrum durch die Bewegung des Flugobjekts in Azimut-Richtung verursacht ist. Auf diese Weise wird für eine jeweilige Range-Position ein einzelnes digitales Radarsignal für das entsprechende Radarecho erhalten. Vorzugsweise kommt diese Variante immer dann zum Einsatz, wenn der gleichzeitige Empfang von mehreren Radarechos rein durch eine niedrige Pulswiederholrate verhindert wird. In diesem Fall ist eine Zerlegung im Dopplerfrequenz-Spektrum aufgrund von Azimut-Mehrdeutigkeiten nicht sinnvoll.

In einer alternativen Ausführungsform werden die digitalisierten Radardaten eines jeweiligen Empfangskanals für das Radarecho eines jeweiligen Radarpulses einer Range-Kompression unterzogen, wobei zusätzlich eine Frequenzzerlegung der digitalisierten Radardaten im Dopplerfrequenz-Spektrum des Radarechos erfolgt, wodurch für eine jeweilige Range-Position mehrere digitale Radarsignale zu unterschiedlichen Dopplerfrequenzen (d.h. unterschiedlichen Azimut-Winkeln) für das entsprechende Radarecho erhalten werden.

In einer bevorzugten Variante der soeben beschriebenen Ausführungsform wird im Rahmen der Bestimmung der kalibrierten Koeffizienten für mehrere Range-Positionen jeweils zumindest eine Kovarianzmatrix ermittelt, deren Einträgen paarweise Kombinationen von Empfangskanälen zugeordnet sind, wobei die Einträge der Kovarianzmatrix über eine Summation des Produkts aus zwei digitalen Radarsignalen für die Empfangskanäle der dem jeweiligen Eintrag zugeordneten paarweisen Kombination über die Radarechos von mehreren Radarpulsen hinweg erhalten werden. Im Falle, dass die digitalen Radarsignale mittels einer Range-Kompression ohne Frequenzzerlegung im Dopplerfrequenz-Spektrum erhalten wurden, gibt es für eine jeweilige Range-Position nur eine Kovarianzmatrix. Ansonsten gibt es mehrere Kovarianz-Matrizen für unterschiedliche Dopplerfrequenzen.

Gemäß der obigen Ausführungsform werden die Einträge des Komplex-Konjugierten des Eigenvektors der Kovarianzmatrix mit dem größten Eigenwert als Gewichte zur Kombination der digitalen Radarsignale für das Radarecho eines jeweiligen Radarpulses in einer jeweiligen Range-Position verwendet, wodurch ein digitales Soll-Radarsignal erhalten wird, basierend auf dem die kalibrierten Koeffizienten der digitalen Strahlformung bestimmt werden. Zu dieser Bestimmung wird insbesondere ein an sich bekannter Wiener-Beamformer genutzt, wie näher in der detaillierten Beschreibung erläutert wird.

In einer bevorzugten Variante der soeben beschriebenen Ausführungsform wird neben dem digitalen Soll-Radarsignal für jeden Empfangskanal ein korrumpiertes Signal berechnet, in dem Range-Mehrdeutigkeiten aufgrund des gleichzeitigen Empfangs von Radarechos unterschiedlicher Radarpulse durch eine Überlagerung von zeitlich versetzten Kopien von digitalen Radarsignalen des jeweiligen Empfangskanals modelliert sind, wobei die kalibrierten Koeffizienten der digitalen Strahlformung Gewichte einer gewichteten Summe der korrumpierten Signale aller Empfangskanäle sind und über eine Optimierung mit dem Optimierungsziel eines möglichst geringen Unterschieds zwischen dem digitalen Soll-Radarsignal und der gewichteten Summe bestimmt werden. Vorzugsweise ist diese Optimierung die Minimierung eines Unterschiedsmaßes (vorzugsweise der betragsmäßigen Differenz oder des mittleren quadratischen Fehlers) zwischen dem digitalen Soll-Radarsignal und der gewichteten Summe.

In einer weiteren Ausführungsform des erfindungsgemäßen Verfahrens wird für eine jeweilige Range-Position zumindest ein Satz von Gewichten berechnet, wobei die Gewichte eines jeweiligen Satzes das relative Verhältnis der digitalen Radarsignale der unterschiedlichen Antennenelemente des Arrays zueinander beschreiben. Der zumindest eine Satz von Gewichten wird insbesondere über eine Kreuzkorrelation von digitalen Radarsignalen unterschiedlicher Antennenelemente ermittelt, wie in der detaillierten Beschreibung näher erläutert wird. Falls die digitalen Radarsignale mittels einer Range-Kompression ohne Frequenzzerlegung im Dopplerfrequenz-Spektrum ermittelt werden, gibt es nur einen Satz von Gewichten in einer jeweiligen Range-Position. Ansonsten gibt es mehrere Sätze von Gewichten in der jeweiligen Range-Position für unterschiedliche Dopplerfrequenzen. Basierend auf dem zumindest einen Satz von Gewichten werden dann die kalibrierten Koeffizienten der digitalen Strahlformung bestimmt. Die Gewichte können dabei auf einfache Weise von einem herkömmlichen Algorithmus zur Bestimmung von Koeffizienten zur digitalen Strahlformung genutzt werden.

In einer weiteren bevorzugten Ausführungsform verwendet der SAR-Normalbetriebsmodus zur Gewinnung von SAR-Bildern, für den der Satz von kalibrierten Parametern ermittelt wird, Radarpulse mit einer vorbestimmten Bandbreite, wobei die Bandbreite der Radarpulse im Kalibriermodus geringer als die vorbestimmte Bandbreite ist. Hierdurch wird der Tatsache Rechnung getragen, dass die im Kalibriermodus erfasste Datenmenge aufgrund der Aufzeichnung von Radardaten für jedes Antennenelement wesentlich größer als im regulären SAR-Betriebsmodus ist. Damit eine Speicherung trotzdem gewährleistet ist, wird die Bandbreite der Radarpulse im Kalibriermodus verringert, so dass gemäß dem Abtastkriterium mit geringerer Abtastrate abgetastet werden kann.

In einer weiteren bevorzugten Ausgestaltung der Erfindung werden die digitalisierten Radardaten von dem Flugobjekt zur Weiterverarbeitung an eine Bodenstation auf der Erdoberfläche übertragen, in der der Satz von kalibrierten Parametern bestimmt wird. Hierbei wird berücksichtigt, dass die Rechenleistung zur Bestimmung der kalibrierten Parameter auf dem Flugobjekt in der Regel eingeschränkt ist.

Neben dem oben beschriebenen Verfahren betrifft die Erfindung eine Synthetik-Apertur-Radarvorrichtung zur Fernerkundung der Erdoberfläche, umfassend eine Radareinrichtung auf einem Flugobjekt, das sich im Betrieb der Synthetik-Apertur-Radarvorrichtung in eine Azimut-Richtung über der Erdoberfläche bewegt, wobei die Radareinrichtung ein Array aus Antennenelementen umfasst, um im Sendebetrieb Radarpulse auszusenden und im Empfangsbetrieb die an der Erdoberfläche reflektierten Radarechos dieser Radarpulse zu empfangen, wobei die Radareinrichtung derart ausgestaltet ist, dass in einem SAR-Normalbetriebsmodus, in dem SAR-Bilder gewonnen werden, gleichzeitig mehrere Radarechos von unterschiedlichen Radarpulsen empfangen werden und über digitale Strahlformung voneinander getrennt werden. Die Synthetik-Apertur-Radarvorrichtung ist dabei zur Durchführung eines Kalibriermodus gemäß dem erfindungsgemäßen Verfahren bzw. einer oder mehrerer bevorzugter Varianten des erfindungsgemäßen Verfahrens eingerichtet.

Die Erfindung betrifft darüber hinaus ein Verfahren zum Betrieb einer Radareinrichtung, wobei die Radareinrichtung den Sendebetrieb und Empfangsbetrieb des erfindungsgemäßen Synthetik-Apertur-Radarverfahrens bzw. einer oder mehrerer bevorzugter Varianten dieses Verfahrens durchführt. Mit anderen Worten enthält dieses Verfahren alle Schritte des erfindungsgemäßen Synthetik-Apertur-Radarverfahrens, bis auf die Weiterverarbeitung der digitalisierten Radardaten zur Ermittlung von kalibrierten Parametern.

Die Erfindung betrifft darüber hinaus eine Radareinrichtung, wobei die Radareinrichtung zur Durchführung des obigen Betriebsverfahrens eingerichtet ist.

Ausführungsbeispiele der Erfindung werden nachfolgend anhand der beigefügten Figuren detailliert beschrieben.

Es zeigen:

Fig. 1 eine schematische Darstellung eines SAR-Betriebsmodus mit digitaler Strahlformung, wobei die Koeffizienten der digitalen Strahlformung basierend auf einer Variante des erfindungsgemäßen Verfahrens ermittelt werden; und

Fig. 2 eine schematische Darstellung der Durchführung einer Variante des erfindungsgemäßen Verfahrens.

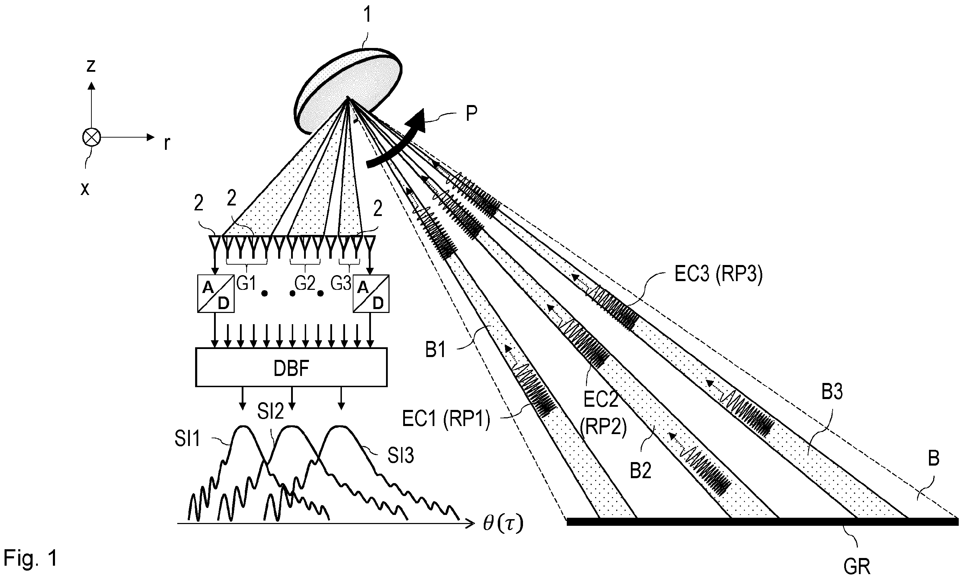

Nachfolgend wird die Erfindung anhand eines Synthetik-Apertur-Radarsystems beschrieben, dessen Aufbau schematisch in Fig. 1 dargestellt ist. Das Radarsystem umfasst eine Radareinrichtung in Form einer Reflektorantenne, die einen Reflektor 1 sowie ein sog. Feed-Array mit einer Vielzahl von Antennenelementen bzw. Antennenstrahlern 2 umfasst, welche nur teilweise mit diesem Bezugszeichen bezeichnet sind. Die Radareinrichtung befindet sich auf einem Flugobjekt (nicht gezeigt), wie z.B. einem Satelliten, das sich mit konstanter Geschwindigkeit in der Azimut-Richtung x über der Erdoberfläche bewegt, wobei die Erdoberfläche mit dem Bezugszeichen GR bezeichnet ist. Durch ein entsprechendes Koordinatensystem ist in Fig. 1 neben der Azimut-Richtung x auch die Range-Richtung r sowie die Höhenrichtung z angedeutet. Die Antennenelemente 2 des Arrays senden mit einer vorgegebenen Pulswiederholrate gleichzeitig Radarstrahlung aus, wodurch ein Radarpuls in wiederholenden Zeitabständen einen Streifen auf der Erdoberfläche beleuchtet. Der räumliche Bereich des ausgesendeten Radarpulses ist in Fig. 1 mit Bezugszeichen B bezeichnet und wird durch zwei gestrichelte Linien begrenzt. Die jeweiligen Radarpulse werden an der Erdoberfläche reflektiert und die daraus resultierenden Radarechos werden wiederum durch die Antennenelemente 2 der Radareinrichtung erfasst. Durch geeignete Signalverarbeitung der erfassten Radarechos können dann Bilder von der Erdoberfläche ermittelt werden.

In dem Szenario der Fig. 1 ist der bekannte SAR-Betriebsmodus "scan-on-receive" dargestellt, der die Erfassung eines breiten Streifens auf die Erdoberfläche in der Range-Richtung r ermöglicht. Dabei besteht das Problem, dass zu einem jeweiligen Empfangszeitpunkt gleichzeitig mehrere Radarechos von unterschiedlichen Radarpulsen empfangen werden, die getrennt werden müssen. In Fig. 1 sind entsprechende Radarechos durch separate Wellenformen mit daran gekoppelten Richtungspfeilen hin zum Reflektor 1 angedeutet. Beispielhaft sind drei Radarechos, die gleichzeitig empfangen werden, mit dem Bezugszeichen EC1, EC2 und EC3 bezeichnet. Jedes Radarecho gehört dabei zu einem anderen Radarpuls. Das Echo EC1 wurde durch den Radarpuls RP1, das Echo EC2 durch den Radarpuls RP2 und das Echo EC3 durch den Radarpuls RP3 hervorgerufen. Der Radarpuls RP1 wurde dabei zu einem späteren Zeitpunkt als der Radarpuls RP2 und der Radarpuls RP2 zu einem späteren Zeitpunkt als der Radarpuls RP3 ausgesendet.

Zur Trennung der Radarechos wird im SAR-Radarsystem eine sog. digitale Strahlformung durchgeführt, die in Fig. 1 mit DBF bezeichnet ist. Im Rahmen dieser digitalen Strahlformung werden zunächst die einzelnen Echosignale der Antennenelemente 2 digitalisiert, wofür A/D-Wandler verwendet werden, die den einzelnen Antennenelementen zugeordnet sind. Anschließend werden die digitalisierten Signale derart kombiniert, dass durch Gruppen von Antennenelementen sog. Beams gebildet werden, welche jeweils dem Radarecho eines einzelnen Radarpulses zugeordnet sind und im Wesentlichen nur das zugeordnete Radarecho empfangen. Die jeweiligen Beams folgen dabei der Ausbreitung des entsprechenden Radarechos, was durch den Pfeil P in Fig. 1 angedeutet ist.

In Fig. 1 ist beispielhaft eine digitale Strahlformung angedeutet, bei der drei Beams B1, B2 und B3 genutzt werden. Die Beams weisen jeweils eine andere Elevation auf, wobei die Elevation die Neigung gegenüber der Erdoberfläche GR in der r-z-Ebene des dargestellten Koordinatensystems repräsentiert. In dem aktuell in Fig. 1 dargestellten Zeitpunkt wird der Beam B1 durch die Gruppe G1 von Antennenelementen, der Beam B2 durch die Gruppe G2 von Antennenelementen und der Beam B3 durch die Gruppe G3 von Antennenelementen generiert.

Nach Durchführung der digitalen Strahlformung erhält man schließlich separate Signale SI1, SI2 und SI3, die zu den jeweiligen Beams B1, B2 und B3 gehören. Die Signale enthalten dabei immer nur das Radarecho eines einzelnen Radarpulses. In Fig. 1 sind die Signale über den Elevationswinkel $\theta$ aufgetragen, der sich in Abhängigkeit von der Zeit $\tau$ verändert, wobei diese Zeit mit der Range-Position korreliert.

Aus dem Stand der Technik sind verschiedene Verfahren zur digitalen Strahlformung bekannt. Ziel dieser Verfahren ist es, den Antennen-Gewinn in Richtung des gewünschten zu empfangenen Radarechos zu maximieren und gleichzeitig den Gewinn der Antenne in Richtungen zu minimieren, aus denen zum gleichen Zeitpunkt ein anderes Radarecho empfangen wird. Um dies zu erreichen, ist ein genaues Wissen über die Amplitude und Phase der Antennendiagramme der einzelnen Antennenelemente erforderlich. Diese Information kann oftmals nicht mit ausreichender Genauigkeit vorab am Boden für eine entsprechende Radareinrichtung eines SAR-Systems ermittelt werden. Demzufolge wird diese Information über geeignete Antennenmodelle oder gegebenenfalls auch über eine Kalibrierung ermittelt, bei der jedoch dedizierte Kalibrationsziele, wie Winkelreflektoren oder Transponder, auf der Erdoberfläche erfasst werden müssen.

Erfindungsgemäß wird nunmehr eine neuartige Kalibrierung bereitgestellt, mit der das Wissen über die Amplitude und Phase die Antennendiagramme der Antennenelemente in einem speziellen Kalibriermodus des sich bereits im Orbit befindlichen SAR-Systems gewonnen wird, ohne dass hierzu Kalibrationsziele auf der Erdoberfläche vermessen werden müssen.

Im Folgenden werden zwei Varianten der erfindungsgemäßen Kalibrierung beschrieben, die als erster Kalibriermodus und als zweiter Kalibriermodus bezeichnet werden. Im ersten Kalibriermodus werden die Radarpulse durch die Radareinrichtung mit einer sehr geringen Pulswiederholrate ausgesendet. Diese Pulswiederholrate ist wesentlich geringer als die Pulswiederholrate des in Fig. 1 gezeigten Betriebsmodus. Insbesondere ist die Pulswiederholrate derart gewählt, dass nur ein einzelnes Radarecho von dem Array aus Antennenelementen 2 zu jedem beliebigen Empfangszeitpunkt empfangen wird. Analog zum Betriebsmodus der Fig. 1 wird dabei ein breiter Streifen auf der Erdoberfläche erfasst, indem alle Antennenelemente zu den entsprechenden Sendezeitpunkten Radarstrahlung zur Erzeugung eines Radarpulses aussenden.

In dem ersten Kalibriermodus werden die Echosignale von jedem Antennenelement des Arrays digitalisiert und unabhängig von den anderen Antennenelementen direkt, d.h. ohne Verwendung von digitaler Strahlformung, gespeichert. Es wird somit für jedes Antennenelement ein Empfangs- bzw. Elevationskanal mit entsprechend zugeordneten digitalisierten Radardaten geschaffen. Die digitalisierten Radardaten werden anschließend an eine (nicht gezeigte) Bodenstation übermittelt, in der dann entsprechende kalibrierte Koeffizienten für die digitale Strahlformung DBF ermittelt werden. Diese Koeffizienten werden dann an das SAR-System im Orbit gesendet, damit dort die digitale Strahlformung mit den kalibrierten Koeffizienten durchgeführt werden kann.

Bei der Übermittlung der digitalisierten Radardaten zur Bodenstation besteht das Problem, dass aufgrund der großen Menge an anfallenden Daten die Übertragungskapazität zur Datenübermittlung hin zur Erdoberfläche nicht ausreicht. Die hohe Datenmenge ergibt sich daraus, dass Daten für jedes Antennenelement erfasst werden, was in dem Betriebsmodus der Fig. 1 nicht der Fall ist, da hier mehrere Antennenelemente zur Formung entsprechender Beams kombiniert werden. Um dieses Problem zu lösen, wird in dem ersten Kalibriermodus und analog auch in dem weiter unten beschriebenen zweiten Kalibriermodus ein Radarpuls mit einer geringeren Bandbreite als im SAR-Betrieb der Fig. 1 verwendet. Zum Beispiel ist für die Tandem-L-Mission in einem Betriebsmodus, der fünf Beams mittels digitaler Strahlformung generiert, eine Bandbreite der Radarpulse von 84 MHz vorgesehen. Diese Bandbreite kann beispielsweise auf 10 MHz im entsprechenden Kalibriermodus reduziert werden, wobei der volle Frequenzbereich von 84 MHz durch aufeinanderfolgende Messzyklen erfasst und eventuelle Frequenzabhängigkeiten vermessen werden können. Bei einer in dieser Mission verwendeten Reflektorantenne mit 35 Antennenelementen können dann die Signale aller Antennenelemente aufgenommen werden, da durch die reduzierte Bandbreite entsprechend dem Abtasttheorem eine geringere Abtastrate ermöglicht wird.

Im Rahmen der Weiterverarbeitung der an die Bodenstation übermittelten digitalisierten Radardaten wird zunächst eine an sich bekannte Range-Kompression für die Radardaten der individuellen Elevationskanäle durchgeführt. Mittels der Range-Kompression wird das Signal-zu-Rausch-Verhältnis des Signals maximiert und der Streupunkt auf der Erdoberfläche an der richtigen Range-Position lokalisiert. Durch die Range-Kompression erhält man digitale Radarsignale, die für einen entsprechenden Radarpuls und eine jeweilige Range-Position einen Amplituden- und Phasenwert liefern. Diese Radarsignale werden im Folgenden mit $u_i(t_k; r)$ bezeichnet. Der Index $i$ spezifiziert dabei ein Antennenelement aus dem Array. Durch den Zeitpunkt $t_k$ wird der Empfang des Radarechos des k-ten Pulses spezifiziert und $r$ bezeichnet eine entsprechende Range-Position. Diese Radarsignale weisen aufgrund der Datenakquisition mit geringer Pulswiederholrate keine Range-Mehrdeutigkeiten auf.

In einem nächsten Schritt werden die gewonnen Radarsignale dazu benutzt, für jede Range-Position die folgende Kovarianzmatrix abzuschätzen:

$$R_{ij}(r) = E\big[u_i(t_k; r)\, u_j^*(t_k; r)\big]$$

Dabei wird der Erwartungswertoperator $E[\ ]$ durch eine Summe über mehrere aufeinander folgende Radarpulse bzw. deren Echos (d.h. eine Summe über Zeitpunkte $t_k$) repräsentiert. Für diese Matrix werden dann Gewichte bestimmt, welche die Einträge des Komplex-Konjugierten des Eigenvektors mit dem maximalen Eigenwert der Kovarianzmatrix $R_{ij}(r)$ sind. Es wird somit für jedes Antennenelement ein entsprechendes Gewicht erhalten. Anschließend werden die Radarsignale $u_i(t_k; r)$ der einzelnen Antennenelemente mit den zugeordneten Gewichten multipliziert und aufsummiert. Auf diese Weise erhält man für jede Range-Position r ein Soll-Radarsignal $u_d(t_k; r)$, welches keine Range-Mehrdeutigkeiten aufgrund der Datenakquisition mit geringer Pulswiederholrate aufweist. Darüber hinaus wird für jeden Elevationskanal ein korrumpiertes Signal $u_{c,i}(t_k; r)$ modelliert, das Range-Mehrdeutigkeiten enthält. Die Modellierung wird durch eine lineare Überlagerung der obigen Radarsignale $u_i(t_k; r)$ wie folgt erreicht:

$$u_{c,i}(t_k; r) = u_i(t_k; r) + \sum_m a_m u_i(t_k; r - r_m)$$

Dabei bezeichnet $r_m$ die Range-Position mit der Range-Mehrdeutigkeit $m$, wobei die Mehrdeutigkeiten entsprechend nummeriert sind. Ferner wird ein Skalierungsfaktor $a_m$ eingeführt, um eine Rückstreudifferenz zwischen dem Soll-Signal und den jeweiligen mehrdeutigen Signalen zu berücksichtigen. Der Skalierungsfaktor wird unter Berücksichtigung von vorab bekannten Streueigenschaften der Erdoberfläche bestimmt, an der die Radarstrahlung gerade reflektiert wird. Eine geeignete Festlegung des Skalierungsfaktors liegt im Rahmen von fachmännischem Handeln.

In einem nächsten Schritt wird schließlich der mittlere quadratische Fehler zwischen dem Soll-Radarsignal $u_d(t_k; r)$ und einer gewichteten Überlagerung der korrumpierten Signale $u_{c,i}(t_k; r)$ minimiert. Dies wird über den an sich bekannten Wiener-Beamformer erreicht. Dabei werden die Gewichte durch die Multiplikation der Kovarianzmatrix der korrumpierten Signale mit einem Vektor abgeleitet, der durch die Korrelation der korrumpierten Signale der einzelnen Antennenelemente mit dem Soll-Radarsignal erhalten wird. Die gewonnenen Gewichte stellen kalibrierte Koeffizienten dar, die anschließend im Betrieb des SAR-Radarsystems zur gewichteten Kombination der durch die Antennenelemente empfangenen Signale im Rahmen einer digitalen Strahlformung genutzt werden. Es wird dabei eine qualitativ hochwertige Strahlformung mit guter Unterdrückung von Range-Mehrdeutigkeiten erreicht.

Da im ersten Kalibriermodus eine geringe Pulswiederholrate verwendet wird, kann eine Auflösung der Radarsignale nicht in Azimut-Richtung aufgrund des Auftretens von Azimut-Mehrdeutigkeiten erreicht werden. Eine Auflösung der Radarsignale in Azimut-Richtung wird jedoch durch den nachfolgend beschriebenen zweiten Kalibriermodus ermöglicht. Im Unterschied zum ersten Kalibriermodus verwendet dieser Kalibriermodus eine höhere Pulswiederholrate, so dass Range-Mehrdeutigkeiten auftreten würden, wenn die jeweiligen Radarpulse durch die Radarstrahlung von allen Antennenelementen des Arrays erzeugt würden.

Die Range-Mehrdeutigkeiten werden nunmehr dadurch vermieden, dass nur eine Teilmenge der Antennenelemente des Arrays zu einem jeweiligen Sendezeitpunkt Radarstrahlung zur Erzeugung eines Radarpulses aussendet. Hierdurch wird ein Streifen mit einer verringerten Breite in Range-Richtung ausgeleuchtet, was zur Unterdrückung von Range-Mehrdeutigkeiten führt. Durch Aktivierung von unterschiedlichen Teilmengen von Antennenelementen kann ferner erreicht werden, dass unterschiedliche Streifen mit verringerter Breite erfasst werden und somit insgesamt Daten für einen Streifen gewonnen werden, der einer Ausleuchtung mit allen Antennenelementen des Arrays entspricht. Durch die Verwendung der höheren Pulswiederholrate werden Azimut-Mehrdeutigkeiten vermieden, so dass nunmehr auch Informationen für unterschiedliche Azimut-Winkel erhalten werden können.

Im Rahmen des zweiten Kalibriermodus werden analog zum ersten Kalibriermodus für jedes Antennenelement und damit für jeden Elevationskanal separat Radarechos erfasst und ohne Zwischenschaltung von digitaler Strahlformung digitalisiert und gespeichert. Diese digitalisierten Radardaten werden dann wiederum zu einer Bodenstation auf die Erdoberfläche zur Weiterverarbeitung übermittelt. Die Weiterverarbeitung beginnt genauso wie beim ersten Kalibriermodus mit einer Range-Kompression für die Signale jedes Elevationskanals. Im Unterschied zum ersten Kalibriermodus werden die range-komprimierten Daten anschließend in die Range-Doppler-Domäne transformiert. Mit anderen Worten wird eine Frequenzzerlegung im Dopplerfrequenz-Spektrum durchgeführt, wobei dieses Dopplerfrequenz-Spektrum durch den Doppler-Effekt hervorgerufen wird, der aus dem Aussenden der Radarpulse während einer Bewegung in Azimut-Richtung resultiert.

Man erhält nach der Range-Kompression und der Zerlegung im Dopplerfrequenz-Spektrum digitale Radarsignale $u_i(\tau, f_D)$, die sowohl von der Range-Position (ausgedrückt durch die Zeit $\tau$) als auch von der Dopplerfrequenz $f_D$ abhängen. Um hieraus kalibrierte Koeffizienten für eine digitale Strahlformung zu ermitteln, wird von der Annahme ausgegangen, dass die Signale von unterschiedlichen Antennenelementen $u_i(\tau, f_D)$ und $u_j(\tau, f_D)$ skalierte Funktionen des gleichen Streuers sind, d.h. sie stehen über komplexe relative Gewichte $a_{ji}(\tau, f_D)$ miteinander in Verbindung. Um diese komplexen Gewichte zu ermitteln, wird im Signal jedes Antennenelements zunächst ein wechselseitig unabhängiges Rauschen $n(\tau, f_D)$ spezifiziert. Dieses Rauschen kann basierend auf einer geeigneten Modellierung bestimmt sein oder aus einer Messung gewonnen worden sein, bei der die Stärke der mit der Radareinrichtung empfangenen Signale ohne das Aussenden eines Radarpulses ermittelt wird. Auf diese Weise erhält man folgende Ausdrücke für die Signale $u_i(\tau, f_D)$ und $u_j(\tau, f_D)$ der jeweiligen Antennenelemente:

$$u_i(\tau, f_D) = u(\tau, f_D) + n_i(\tau, f_D)$$

$$u_j(\tau, f_D) = a_{ji}(\tau, f_D) \cdot u(\tau, f_D) + n_j(\tau, f_D)$$

Die komplexen Gewichte $a_{ji}(\tau, f_D)$ können dann durch eine Kreuzkorrelation der Signale $u_j(\tau, f_D)$ und $u_i(\tau, f_D)$ wie folgt erhalten werden:

$$a_{ji}(\tau, f_D) = \frac{E\left[u_j(\tau, f_D) \cdot u_i^*(\tau, f_D)\right]}{E\left[|u_i(\tau, f_D)|^2\right] - E\left[|n_i(\tau, f_D)|^2\right]}$$

Der Erwartungswert $E[]$ wird dabei durch eine Mittelung über eine lokale Nachbarschaft im Range-Doppler-Raum $(\tau, f_D)$ approximiert. Die obigen Gewichte $a_{ji}(\tau, f_D)$ können anschließend in geeigneter Weise bei einer Koeffizientenbestimmung für eine digitale Strahlformung einfließen. Üblicherweise werden in bekannten Verfahren zur Koeffizientenbestimmung solche Gewichte berücksichtigt, nunmehr sind diese Gewichte jedoch über eine neuartige Kalibrierung bestimmt worden. Als Ergebnis erhält man schließlich kalibrierte Koeffizienten für die digitale Strahlformung, bei denen die Gewichte $a_{ji}(\tau, f_D)$ berücksichtigt wurden.

Für die Koeffizientenbestimmung der digitalen Strahlformung wurden im ersten und zweiten Kalibriermodus verschiedene Verfahren verwendet. Diese Verfahren sind jedoch zwischen den Kalibriermodi austauschbar. Mit anderen Worten kann der erste Kalibriermodus gegebenenfalls die Koeffizientenbestimmung des zweiten Kalibriermodus und umgekehrt verwenden.

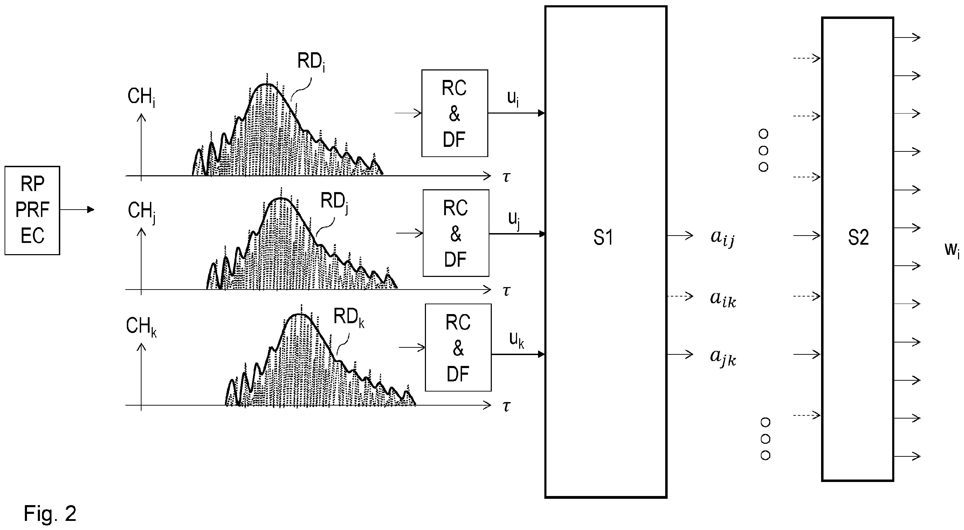

Fig. 2 zeigt nochmals beispielhaft die Durchführung des soeben beschriebenen zweiten Kalibriermodus. Es wird dabei eine Radareinrichtung betrachtet, die eine Reflektorantenne umfasst. Im Kalibriermodus werden Radarpulse RP mit einer vorgegebenen Pulswiederholfrequenz PRF durch Teilmengen von Antennenelementen 2 des Arrays ausgesendet und die entsprechenden Radarechos EC werden durch alle Antennenelemente des Arrays empfangen. Wie oben dargelegt, wird bei einer Reflektorantenne durch das Aussenden nur über Teilmengen von Antennenelementen erreicht, dass Radarechos von unterschiedlichen Radarpulsen nicht gleichzeitig an dem Array ankommen. Die Echosignale jedes einzelnen Antennenelements bzw. Empfangskanals werden separat erfasst und nach Digitalisierung direkt ohne Zwischenschaltung von digitaler Strahlformung gespeichert, wodurch digitalisierte Radardaten für jeden Empfangskanal erhalten werden. Beispielhaft sind in Fig. 2 die Radardaten für drei Antennenelemente bzw. Empfangskanäle $CH_i$, $CH_j$ und $CH_k$ dargestellt. Die entsprechenden Radardaten sind mit $RD_i$, $RD_j$ und $RD_k$ bezeichnet.

Die Radardaten der einzelnen Antennenelemente werden an eine Bodenstation übermittelt, in der eine Weiterverarbeitung durchgeführt wird. Diese Weiterverarbeitung umfasst die oben beschriebene Range-Kompression, die in Fig. 2 mit RC bezeichnet ist, sowie die oben beschriebene Zerlegung im Dopplerfrequenz-Spektrum, die in Fig. 2 mit DF bezeichnet ist. Auf diese Weise erhält man für jeden Empfangskanal die entsprechenden range-komponierten und frequenzzerlegten Signale $u_i$, $u_j$ und $u_k$. Gemäß Schritt S1 werden diese Signale anschließend wie oben beschrieben weiterverarbeitet, so dass relative Gewichte erhalten werden, wobei beispielhaft die Gewichte $a_{ij}$, $a_{ik}$ und $a_{jk}$ angegeben sind. Mit diesen Gewichten werden nunmehr in an sich bekannter Weise in einem Schritt S2 Koeffizienten $w_i$ einer digitalen Strahlformung ermittelt.

Die im Vorangegangenen beschriebenen Ausführungsformen der Erfindung weisen eine Reihe von Vorteilen auf. Insbesondere wird es ermöglicht, ein SAR-Radarsystem im Orbit geeignet zu kalibrieren, ohne Kalibrationsziele zu verwenden. In einem entsprechenden Kalibriermodus werden dabei Radarsignale erfasst, die keine Range-Mehrdeutigkeiten aufweisen. Dies kann über eine geringe Pulswiederholrate bzw. das Aussenden von Radarstrahlung hin zu einem verkleinerten Bereich der Erdoberfläche erreicht werden. Im Kalibriermodus werden die empfangenen Radarsignale von allen Antennenelementen ohne Zwischenschaltung einer digitalen Strahlformung aufgezeichnet. Mit diesen Daten können dann auf einfache Weise kalibrierte Parameter des SAR-Radarsystems und insbesondere kalibrierte Koeffizienten für eine digitale Strahlformung ermittelt werden.

## Patentansprüche

1. Synthetik-Apertur-Radarverfahren zur Fernerkundung der Erdoberfläche (GR) über eine Radareinrichtung (1, 2) auf einem Flugobjekt, das sich in eine Azimut-Richtung (x) über der Erdoberfläche (GR) bewegt, wobei die Radareinrichtung (1, 2) ein Array aus Antennenelementen (2) umfasst, um im Sendebetrieb Radarpulse (RP) auszusenden und im Empfangsbetrieb die an der Erdoberfläche (GR) reflektierten Radarechos (EC) dieser Radarpulse (RP) zu empfangen, wobei die Radareinrichtung (1, 2) derart ausgestaltet ist, dass in einem SAR-Normalbetriebsmodus zur Gewinnung von SAR-Bildern gleichzeitig mehrere Radarechos (EC1, EC2, EC3) von unterschiedlichen Radarpulsen (RP1, RP2, RP3) empfangen werden und über digitale Strahlformung (DBF) voneinander getrennt werden, wobei ein Kalibriermodus durchgeführt wird, in dem

   - das Aussenden der Radarpulse (RP) im Sendebetrieb mit einer vorgegebenen Pulswiederholrate (PRF) derart erfolgt, dass von allen Antennenelementen (2) des Arrays zum gleichen Zeitpunkt im Empfangsbetrieb immer nur Echosignale eines einzelnen Radarechos (EC) empfangen werden;
   **dadurch gekennzeichnet, dass**
   - im Empfangsbetrieb die Echosignale in mehreren Empfangskanälen ($CH_i$, $CH_j$, $CH_k$) aufgezeichnet werden, wobei einem jeweiligen Empfangskanal ($CH_i$, $CH_j$, $CH_k$) ein unterschiedliches Antennenelement (2) zugeordnet ist und im jeweiligen Empfangskanal ($CH_i$, $CH_j$, $CH_k$) die durch das zugeordnete Antennenelement (2) empfangenen Echosignale digitalisiert und unabhängig von den anderen Empfangskanälen ($CH_i$, $CH_j$, $CH_k$) direkt gespeichert werden, wodurch digitalisierte Radardaten ($RD_i$, $RD_j$, $RD_k$) für jeden Empfangskanal ($CH_i$, $CH_j$, $CH_k$) erhalten werden;
   - die digitalisierten Radardaten ($RD_i$, $RD_j$, $RD_k$) der jeweiligen Empfangskanäle ($CH_i$, $CH_j$, $CH_k$) weiterverarbeitet werden, um einen Satz von kalibrierten Parametern (wi) der Radareinrichtung (1, 2) für den SAR-Normalbetriebsmodus zu ermitteln, wobei der Satz von kalibrierten Parametern (wi) kalibrierte Koeffizienten zur Kombination von empfangenen Echosignalen (EC) der einzelnen Antennenelemente (2) bei der digitalen Stahlformung (DBF) im SAR-Normalbetriebsmodus zur Gewinnung von SAR-Bildern umfasst.

2. Verfahren nach Anspruch 1, **dadurch gekennzeichnet, dass** im Sendebetrieb alle Antennenelemente (2) des Arrays gleichzeitig Radarstrahlung mit der vorgegebenen Pulswiederholrate (PRF) aussenden, wobei die vorgegebene Pulswiederholrate (PRF) gegenüber der Pulswiederholrate des SAR-Normalbetriebsmodus verkleinert ist, so dass Radarechos (EC) unterschiedlicher Radarpulse (RP) nie gleichzeitig an dem Array ankommen.

3. Verfahren nach Anspruch 1 oder 2, **dadurch gekennzeichnet, dass** zu jedem Sendezeitpunkt Radarstrahlung über die Radareinrichtung (1, 2) auf einen gegenüber dem SAR-Normalbetriebsmodus verkleinerten Bereich der Erdoberfläche (GR) gerichtet wird, so dass Radarechos (EC) unterschiedlicher Radarpulse (RP) nie gleichzeitig an dem Array von Antennenelementen (2) ankommen.

4. Verfahren nach einem der vorhergehenden Ansprüche, **dadurch gekennzeichnet, dass** im Rahmen der Weiterverarbeitung die digitalisierten Radardaten ($RD_i$, $RD_j$, $RD_k$) jedes Empfangskanals ($CH_i$, $CH_j$, $CH_k$) für das Radarecho (EC) eines jeweiligen Radarpulses (RP) einer Range-Kompression (RC) unterzogen werden, wodurch für den jeweiligen Radarpuls (RP) mehrere digitale Radarsignale ($ui$, $u_j$, $u_k$) erhalten werden, wobei für das entsprechende Radarecho (EC) zumindest ein digitales Radarsignal ($ui$, $u_j$, $u_k$) für eine jeweilige Range-Position (r) aus einer Vielzahl von Range-Positionen (r) vorliegt.

5. Verfahren nach Anspruch 4, **dadurch gekennzeichnet, dass** die digitalisierten Radardaten ($RD_i$, $RD_j$, $RD_k$) eines jeweiligen Empfangskanals ($CH_i$, $CH_j$, $CH_k$) für das Radarecho (EC) eines jeweiligen Radarpulses (RP) der Range-Kompression (RC) unterzogen werden, ohne dass ferner eine Frequenzzerlegung der digitalisierten Radardaten ($RD_i$, $RD_j$, $RD_k$) im Dopplerfrequenz-Spektrum des Radarechos (EC) erfolgt, wodurch für eine jeweilige Range-Position (r) ein einzelnes digitales Radarsignal ($ui$, $u_j$, $u_k$) für das entsprechende Radarecho (EC) erhalten wird, wobei das Dopplerfrequenz-Spektrum durch die Bewegung des Flugobjekts in Azimut-Richtung (x) verursacht ist.

6. Verfahren nach Anspruch 4, **dadurch gekennzeichnet, dass** zusätzlich zu der Range-Kompression (RC) eine Frequenzzerlegung der digitalisierten Radardaten ($RD_i$, $RD_j$, $RD_k$) im Dopplerfrequenz-Spektrum des Radarechos (EC) erfolgt, wodurch für eine jeweilige Range-Position (r) mehrere digitale Radarsignale ($ui$, $u_j$, $u_k$) zu unterschiedlichen Dopplerfrequenzen für das entsprechende Radarecho (EC) erhalten werden, wobei das Dopplerfrequenz-Spektrum durch die Bewegung des Flugobjekts in Azimut-Richtung (x) verursacht ist.

7. Verfahren nach einem der Ansprüche 4 bis 6, **dadurch gekennzeichnet, dass** im Rahmen der Bestimmung der kalibrierten Koeffizienten ($w_i$) für mehrere Range-Positionen (r) jeweils zumindest eine Kovarianzmatrix ermittelt wird, deren Einträgen paarweise Kombinationen von Empfangskanälen ($CH_i$, $CH_j$, $CH_k$) zugeordnet sind, wobei die Einträge der Kovarianzmatrix über eine Summation des Produkts aus zwei digitalen Radarsignalen ($ui$, $u_j$, $u_k$) für die Empfangskanäle ($CH_i$, $CH_j$, $CH_k$) der dem jeweiligen Eintrag zugeordneten paarweisen Kombination über die Radarechos (EC) von mehreren Radarpulsen (RP) hinweg erhalten werden, wobei die Einträge des Komplex-Konjugierten des Eigenvektors der Kovarianzmarix mit dem größten Eigenwert als Gewichte zur Kombination der digitalen Radarsignale ($ui$, $u_j$, $u_k$) für das Radarecho (EC) eines jeweiligen Radarpulses (RP) in einer jeweiligen Range-Position (r) verwendet werden, wodurch ein digitales Soll-Radarsignal erhalten wird, basierend auf dem die kalibrierten Koeffizienten der digitalen Strahlformung (DBF) bestimmt werden.

8. Verfahren nach Anspruch 7, **dadurch gekennzeichnet, dass** neben dem digitalen Soll-Radarsignal für jeden Empfangskanal ($CH_i$, $CH_j$, $CH_k$) ein korrumpiertes Signal berechnet wird, in dem Range-Mehrdeutigkeiten aufgrund des gleichzeitigen Empfangs von Radarechos (EC) unterschiedlicher Radarpulse (RP) durch eine Überlagerung von zeitlich versetzten Kopien von digitalen Radarsignalen ($ui$, $u_j$, $u_k$) des jeweiligen Empfangskanals ($CH_i$, $CH_j$, $CH_k$) modelliert sind, wobei die kalibrierten Koeffizienten der digitalen Strahlformung (DBF) Gewichte einer gewichteten Summe der korrumpierten Signale aller Empfangskanäle ($CH_i$, $CH_j$, $CH_k$) sind und über eine Optimierung mit dem Optimierungsziel eines möglichst geringen Unterschieds zwischen dem digitalen Soll-Radarsignal und der gewichteten Summe bestimmt werden.

9. Verfahren nach einem der Ansprüche 4 bis 6, **dadurch gekennzeichnet, dass** für eine jeweilige Range-Position (r) zumindest ein Satz von Gewichten ($a_{ji}$) berechnet wird, wobei die Gewichte ($a_{ji}$) eines jeweiligen Satzes das relative Verhältnis der digitalen Radarsignale ($ui$, $u_j$, $u_k$) der unterschiedlichen Antennenelemente (2) des Arrays zueinander beschreiben und basierend auf dem zumindest einen Satz von Gewichten ($a_{ji}$) die kalibrierten Koeffizienten der digitalen Strahlformung (DBF) bestimmt werden.

10. Verfahren nach einem der vorhergehenden Ansprüche, **dadurch gekennzeichnet, dass** der SAR-Normalbetriebsmodus zur Gewinnung von SAR-Bildern, für den der Satz von kalibrierten Parametern ($wi$) ermittelt wird, Radarpulse mit einer vorbestimmten Bandbreite verwendet, wobei die Bandbreite der Radarpulse (RP) im Kalibriermodus geringer als die vorbestimmte Bandbreite ist.

11. Verfahren nach einem der vorhergehenden Ansprüche, **dadurch gekennzeichnet, dass** die digitalisierten Radardaten ($RD_i$, $RD_j$, $RD_k$) von dem Flugobjekt an eine Bodenstation auf der Erdoberfläche übermittelt werden, in der der Satz von kalibrierten Parametern ($wi$) bestimmt wird.

**12.** Synthetik-Apertur-Radarvorrichtung zur Fernerkundung der Erdoberfläche (GR), umfassend eine Radareinrichtung (1, 2) auf einem Flugobjekt, das sich im Betrieb der Synthetik-Apertur-Radarvorrichtung in eine Azimut-Richtung (x) über der Erdoberfläche (GR) bewegt, wobei die Radareinrichtung (1, 2) ein Array aus Antennenelementen (2) umfasst, um im Sendebetrieb Radarpulse (RP) auszusenden und im Empfangsbetrieb die an der Erdoberfläche (GR) reflektierten Radarechos (EC) dieser Radarpulse (RP) zu empfangen, wobei die Radareinrichtung (1, 2) derart ausgestaltet ist, dass in einem SAR-Normalbetriebsmodus zur Gewinnung von SAR-Bildern gleichzeitig mehrere Radarechos (EC1, EC2, EC3) von unterschiedlichen Radarpulsen (RP1, RP2, RP3) empfangen werden und über digitale Strahlformung (DBF) voneinander getrennt werden, wobei die Synthetik-Apertur-Radarvorrichtung zur Durchführung eines Kalibriermodus eingerichtet ist, in dem

- das Aussenden der Radarpulse (RP) im Sendebetrieb mit einer vorgegebenen Pulswiederholrate (PRF) derart erfolgt, dass von allen Antennenelementen (2) des Arrays zum gleichen Zeitpunkt im Empfangsbetrieb immer nur Echosignale eines einzelnen Radarechos (EC) empfangen werden;
**dadurch gekennzeichnet, dass**
- im Empfangsbetrieb die Echosignale in mehreren Empfangskanälen ($CH_i$, $CH_j$, $CH_k$) aufgezeichnet werden, wobei einem jeweiligen Empfangskanal ($CH_i$, $CH_j$, $CH_k$) ein unterschiedliches Antennenelement (2) zugeordnet ist und im jeweiligen Empfangskanal ($CH_i$, $CH_j$, $CH_k$) die durch das zugeordnete Antennenelement (2) empfangenen Echosignale digitalisiert und unabhängig von den anderen Empfangskanälen ($CH_i$, $CH_j$, $CH_k$) direkt gespeichert werden, wodurch digitalisierte Radardaten ($RD_i$, $RD_j$, $RD_k$) für jeden Empfangskanal ($CH_i$, $CH_j$, $CH_k$) erhalten werden;
- die digitalisierten Radardaten ($RD_i$, $RD_j$, $RD_k$) der jeweiligen Empfangskanäle ($CH_i$, $CH_j$, $CH_k$) weiterverarbeitet werden, um einen Satz von kalibrierten Parametern (wi) der Radareinrichtung (1, 2) für einen SAR-Betriebsmodus zur Gewinnung von SAR-Bildern zu ermitteln, wobei der Satz von kalibrierten Parametern ($w_i$) kalibrierte Koeffizienten zur Kombination von empfangenen Echosignalen (EC) der einzelnen Antennenelemente (2) bei der digitalen Strahlformung (DBF) im SAR-Normalbetriebsmodus zur Gewinnung von SAR-Bildern umfasst.

**13.** Synthetik-Apertur-Radarvorrichtung nach Anspruch 12, **dadurch gekennzeichnet**, das die Synthetik-Apertur-Radarvorrichtung zur Durchführung eines Verfahrens nach einem der Ansprüche 2 bis 11 eingerichtet ist.

**14.** Verfahren zum Betrieb einer Radareinrichtung (1, 2), wobei die Radareinrichtung (1, 2) den Sendebetrieb und Empfangsbetrieb des Synthetik-Apertur-Radarverfahrens nach einem der Ansprüche 1 bis 11 durchführt.

**15.** Radareinrichtung, welche zur Durchführung des Verfahrens nach Anspruch 14 eingerichtet ist.

**Claims**

**1.** A synthetic aperture radar method for remote sensing of the surface of the Earth (GR) by means of a radar device (1, 2) on a flying object moving in an azimuth direction (x) above the surface of the Earth (GR), wherein the radar device (1, 2) comprises an array of antenna elements (2) for transmitting radar pulses (RP) in a transmitting operation and for receiving radar echoes (EC) of said radar pulses (RP) reflected at the surface of the Earth (GR) in a receiving operation, wherein the radar device (1, 2) is configured such that, in an SAR normal operating mode for obtaining SAR images, simultaneously a plurality of radar echoes (EC1, EC2, EC3) from different radar pulses (RP1, RP2, RP3) are received and are separated from one another by means of digital beamforming (DBF), wherein a calibration mode is carried out in which

- the transmission of the radar pulses (RP) in the transmitting operation is carried out with a predetermined pulse repetition rate (PRF) so that only echo signals of a single radar echo (EC) are received by all antenna elements (2) of the array at the same point in time in the receiving operation;
**characterized in that**
- in the receiving operation, the echo signals are recorded in a plurality of receiving channels ($CH_i$, $CH_j$, $CH_k$), wherein a different antenna element (2) is assigned to a respective receiving channel ($CH_i$, $CH_j$, $CH_k$), and in the respective receiving channel ($CH_i$, $CH_j$, $CH_k$) the echo signals received by the assigned antenna element (2) are digitized and directly stored independently of the other receiving channels ($CH_i$, $CH_j$, $CH_k$), thereby obtaining digitized radar data ($RD_i$, $RD_j$, $RD_k$) for each receiving channel ($CH_i$, $CH_j$, $CH_k$);
- the digitized radar data ($RD_i$, $RD_j$, $RD_k$) of the respective receiving channels ($CH_i$, $CH_j$, $CH_k$) are further processed to determine a set of calibrated parameters (wi) of the radar device (1, 2) for the SAR normal operating mode, wherein the set of calibrated parameters (wi) comprises calibrated coefficients for combining received echo signals (EC) of individual antenna elements (2) during the digital beamforming (DBF) in the SAR normal operating mode for obtaining SAR images.

2.  The method according to claim 1, **characterized in that** in the transmitting operation all antenna elements (2) of the array simultaneously transmit radar radiation at the predetermined pulse repetition rate (PRF), wherein the predetermined pulse repetition rate (PRF) is reduced in comparison to the pulse repetition rate of the SAR normal operating mode, so that radar echoes (EC) of different radar pulses (RP) never simultaneously arrive at the array.

3.  The method according to claim 1 or 2, **characterized in that** at any time of transmission, radar radiation is directed via the radar device (1, 2) onto an area of the surface of the Earth (GR) which is reduced in size in comparison to the SAR normal operating mode, so that radar echoes (EC) of different radar pulses (RP) never simultaneously arrive at the array of antenna elements (2).

4.  The method according to one of the preceding claims, **characterized in that**, during further processing, the digitized radar data ($RD_i$, $RD_j$, $RD_k$) of each receiving channel ($CH_i$, $CH_j$, $CH_k$) are subjected to a range compression (RC) for the radar echo (EC) of a respective radar pulse (RP), thereby obtaining a plurality of digital radar signals (ui, $u_j$, $u_k$) for the respective radar pulse (RP), wherein for the corresponding radar echo (EC) at least one digital radar signal (ui, $u_j$, $u_k$) is present for a respective range position (r) out of a plurality of range positions (r).

5.  The method according to claim 4, **characterized in that** the digitized radar data ($RD_i$, $RD_j$, $RD_k$) of a respective receiving channel ($CH_i$, $CH_j$, $CH_k$) for the radar echo (EC) of a respective radar pulse (RP) are subjected to the range compression (RC) without carrying out any frequency decomposition of the digitized radar data ($RD_i$, $RD_j$, $RD_k$) in the Doppler frequency spectrum of the radar echo (EC), thereby obtaining for a respective range position (r) a single digital radar signal (ui, $u_j$, $u_k$) for the corresponding radar echo (EC), wherein the Doppler frequency spectrum is caused by the movement of the flying object in the azimuth direction (x).

6.  The method according to claim 4, **characterized in that** additionally to the range compression (RC) a frequency decomposition of the digitized radar data ($RD_i$, $RD_j$, $RD_k$) in the Doppler frequency spectrum of the radar echo (EC) is carried out, thereby obtaining for a respective range position (r) a plurality of digital radar signals (ui, $u_j$, $u_k$) at different Doppler frequencies for the corresponding radar echo (EC), wherein the Doppler frequency spectrum is caused by the movement of the flying object in the azimuth direction (x).

7.  The method according to one of the claims 4 to 6, **characterized in that**, during the determination of the calibrated coefficients (wi) for a plurality of range positions (r), in each case at least one covariance matrix is determined, the entries of which are assigned to pairwise combinations of receiving channels ($CH_i$, $CH_j$, $CH_k$), wherein the entries of the covariance matrix are obtained by summing over the radar echoes (EC) from a plurality of radar pulses (RP) the product of two digital radar signals (ui, uj, $_{uk}$) for the receiving channels ($CH_i$, $CH_j$, $CH_k$) of the pairwise combination assigned to the respective entry, wherein the entries of the complex-conjugate of the eigenvector of the covariance matrix with the largest eigenvalue are used as weights for combining the digital radar signals (ui, $u_j$, $u_k$) for the radar echo (EC) of a respective radar pulse (RP) at a respective range position (r), thereby obtaining a digital target radar signal, based on which the calibrated coefficients of the digital beamforming (DBF) are determined.

8.  The method according to claim 7, **characterized in that**, in addition to the digital target radar signal, for each receiving channel ($CH_i$, $CH_j$, $CH_k$) a corrupted signal is calculated, in which range ambiguities due to the simultaneous reception of radar echoes (EC) of different radar pulses (RP) are modelled by a superposition of time-shifted copies of digital radar signals (ui, $u_j$, $u_k$) of the respective receiving channel ($CH_i$, $CH_j$, $CH_k$), wherein the calibrated coefficients of the digital beamforming (DBF) are weights of a weighted sum of the corrupted signals of all receiving channels ($CH_i$, $CH_j$, $CH_k$) and are determined by means of an optimization with the optimization objective of a smallest possible difference between the digital target radar signal and the weighted sum.

9.  The method according to one of the claims 4 to 6, **characterized in that** at least one set of weights ($a_{ji}$) is calculated for a respective range position (r), wherein the weights ($a_{ji}$) of a respective set describe the relative ratio of the digital radar signals (ui, $u_j$, $u_k$) of the different antenna elements (2) of the array to one another, and wherein the calibrated coefficients of the digital beamforming (DBF) are determined based on the at least one set of weights ($a_{ji}$).

10. The method according to one of the preceding claims, **characterized in that** the SAR normal operating mode for obtaining SAR images, for which the set of calibrated parameters (wi) is determined, uses radar pulses having a predetermined bandwidth, wherein the bandwidth of the radar pulses (RP) in the calibration mode is less than the predetermined bandwidth.

11. The method according to one of the preceding claims, **characterized in that** the digitized radar data ($RD_i$, $RD_j$, $RD_k$) are transmitted from the flying object to a ground station on the surface of the earth, where the set of calibrated parameters (wi) is determined.

12. A synthetic aperture radar device for remote sensing of the surface of the Earth (GR), comprising a radar device (1, 2) on a flying object moving in an azimuth direction (x) above the surface of the Earth (GR) during operation of the synthetic aperture radar device, wherein the radar device (1, 2) comprises an array of antenna elements (2) to transmit radar pulses (RP) in a transmitting operation and to receive radar echoes (EC) of these radar pulses (RP) reflected on the surface of the Earth (GR) in a receiving operation, wherein the radar device (1, 2) is configured such that in an SAR normal operating mode for obtaining SAR images a plurality of radar echoes (EC1, EC2, EC3) from different radar pulses (RP1, RP2, RP3) are received simultaneously and are separated from one another by means of digital beamforming (DBF), wherein the synthetic aperture radar device is configured to carry out a calibration mode in which

   - the transmission of the radar pulses (RP) in the transmitting operation is carried out with a predetermined pulse repetition rate (PRF) so that only echo signals of a single radar echo (EC) are received by all antenna elements (2) of the array at the same point in time in the receiving operation;
   **characterized in that**
   - in the receiving operation, the echo signals are recorded in a plurality of receiving channels ($CH_i$, $CH_j$, $CH_k$), wherein a different antenna element (2) is assigned to a respective receiving channel (CHi, CHj, CHk), and in the respective receiving channel ($CH_i$, $CH_j$, $CH_k$) the echo signals received by the assigned antenna element (2) are digitized and directly stored independently of the other receiving channels ($CH_i$, $CH_j$, $CH_k$), thereby obtaining digitized radar data ($RD_i$, $RD_j$, $RD_k$) for each receiving channel ($CH_i$, $CH_j$, $CH_k$);
   - the digitized radar data ($RD_i$, $RD_j$, $RD_k$) of the respective receiving channels ($CH_i$, $CH_j$, $CH_k$) are further processed to determine a set of calibrated parameters (wi) of the radar device (1, 2) for an SAR operating mode for obtaining SAR images, wherein the set of calibrated parameters (wi) comprises calibrated coefficients for combining received echo signals (EC) of individual antenna elements (2) during the digital beamforming (DBF) in the SAR normal operating mode for obtaining SAR images.

13. The synthetic aperture radar device according to claim 12, **characterized in that** the synthetic aperture radar device is configured to perform a method according to one of the claims 2 to 11.

14. A method for operating a radar device (1, 2), the radar device (1, 2) carrying out the transmitting operation and the receiving operation of the synthetic aperture radar method according to one of the claims 1 to 11.

15. A radar device configured to carry out the method according to claim 14.

**Revendications**

1. Procédé de radar à synthèse d'ouverture pour la télédétection de la surface terrestre (GR) par le biais d'une installation radar (1, 2) sur un objet volant qui se déplace dans une direction azimutale (x) au-dessus de la surface terrestre (GR), dans lequel l'installation radar (1, 2) comprend un réseau d'éléments d'antenne (2) pour émettre des impulsions radar (RP) dans le mode d'émission et pour recevoir les échos radar (EC) réfléchis sur la surface terrestre (GR) de ces impulsions radar (RP) dans le mode de réception, dans lequel l'installation radar (1, 2) est configurée de telle sorte que plusieurs échos radar (EC1, EC2, EC3) de différentes impulsions radar (RP1, RP2, RP3) sont reçus simultanément dans un mode de fonctionnement normal du RSO en vue de l'obtention d'images du RSO et sont séparés l'un de l'autre par le biais de formation de faisceau numérique (DBF), dans lequel un mode de calibrage est réalisé, dans lequel

   - l'émission des impulsions radar (RP) dans le mode d'émission s'effectue avec une fréquence de répétition des impulsions prédéfinie (PRF) de telle sorte que seuls des signaux d'écho d'un écho radar individuel (EC) sont reçus au même instant dans le mode de réception par tous les éléments d'antenne (2) du réseau ;
   **caractérisé en ce que**
   - les signaux d'écho sont enregistrés dans plusieurs canaux de réception ($CH_i$, $CH_j$, $CH_k$) dans le mode de réception, dans lequel un élément d'antenne différent (2) est associé à un canal de réception respectif ($CH_i$,

CH$_j$, CH$_k$) et les signaux d'écho reçus par l'élément d'antenne associé (2) sont numérisés dans le canal de réception respectif (CH$_i$, CH$_j$, CH$_k$) et directement mémorisés indépendamment des autres canaux de réception (CH$_i$, CH$_j$, CH$_k$), moyennant quoi des données radar numérisées (RD$_i$, RD$_j$, RD$_k$) sont obtenues pour chaque canal de réception (CH$_i$, CH$_j$, CH$_k$) ;

- les données radar numérisées (RD$_i$, RD$_j$, RD$_k$) des canaux de réception respectifs (CH$_i$, CH$_j$, CH$_k$) subissent un traitement ultérieur pour déterminer un ensemble de paramètres calibrés (wi) de l'installation radar (1, 2) pour le mode de fonctionnement normal du RSO, dans lequel l'ensemble de paramètres calibrés (wi) comprend des coefficients calibrés en vue de la combinaison de signaux d'écho reçus (EC) des éléments d'antenne individuels (2) lors de la formation de faisceau numérique (DBF) dans le mode de fonctionnement normal du RSO en vue de l'obtention d'images du RSO.

2. Procédé selon la revendication 1, **caractérisé en ce que** tous les éléments d'antenne (2) du réseau émettent en même temps du rayonnement radar avec la fréquence de répétition des impulsions prédéfinie (PRF) dans le mode d'émission, dans lequel la fréquence de répétition des impulsions prédéfinie (PRF) est réduite par rapport à la fréquence de répétition des impulsions du mode de fonctionnement normal du RSO de sorte que des échos radar (EC) de différentes impulsions radar (RP) n'arrivent jamais simultanément sur le réseau.

3. Procédé selon la revendication 1 ou 2, **caractérisé en ce que** du rayonnement radar est dirigé à chaque instant d'émission par le biais de l'installation radar (1, 2) vers une région de la surface terrestre (GR) réduite par rapport au mode de fonctionnement normal du RSO de sorte que des échos radar (EC) de différentes impulsions radar (RP) n'arrivent jamais simultanément sur le réseau d'éléments d'antenne (2).

4. Procédé selon une des revendications précédentes, **caractérisé en ce que** les données radar numérisées (RD$_i$, RD$_j$, RD$_k$) de chaque canal de réception (CH$_i$, CH$_j$, CH$_k$) pour l'écho radar (EC) d'une impulsion radar respective (RP) sont soumises dans le cadre du traitement ultérieur à une compression de distance (RC), moyennant quoi plusieurs signaux radar numériques (ui, u$_j$, u$_k$) sont obtenus pour l'impulsion radar respective (RP), dans lequel au moins un signal radar numérique (ui, u$_j$, u$_k$) est présent pour une position de distance respective (r) parmi une pluralité de positions de distance (r) pour l'écho radar correspondant (EC).

5. Procédé selon la revendication 4, **caractérisé en ce que** les données radar numérisées (RD$_i$, RD$_j$, RD$_k$) d'un canal de réception respectif (CH$_i$, CH$_j$, CH$_k$) pour l'écho radar (EC) d'une impulsion radar respective (RP) sont soumises à la compression de distance (RC) sans qu'une résolution de fréquence des données radar numérisées (RD$_i$, RD$_j$, RD$_k$) n'ait en outre lieu dans le spectre des fréquences Doppler de l'écho radar (EC), moyennant quoi un signal radar numérique individuel (ui, u$_j$, u$_k$) est obtenu pour l'écho radar correspondant (EC) pour une position de distance respective (r), dans lequel le spectre des fréquences Doppler est provoqué par le déplacement de l'objet volant dans la direction azimutale (x).

6. Procédé selon la revendication 4, **caractérisé en ce qu'**outre la compression de distance (RC), une résolution de fréquence des données radar numérisées (RD$_i$, RD$_j$, RD$_k$) a lieu dans le spectre des fréquences Doppler de l'écho radar (EC), moyennant quoi plusieurs signaux radar numériques (ui, u$_j$, u$_k$) à différentes fréquences Doppler sont obtenus pour l'écho radar correspondant (EC) pour une position de distance respective (r), dans lequel le spectre des fréquences Doppler est provoqué par le déplacement de l'objet volant dans la direction azimutale (x).

7. Procédé selon une des revendications 4 à 6, **caractérisé en ce qu'**au moins une matrice de covariance est à chaque fois déterminée dans le cadre de la détermination des coefficients calibrés (wi) pour plusieurs positions de distance (r), dont les entrées sont associées par paire à des combinaisons de canaux de réception (CH$_i$, CH$_j$, CH$_k$), dans lequel les entrées de la matrice de covariance sont obtenues par le biais d'une sommation du produit de deux signaux radar numériques (ui, u$_j$, u$_k$) pour les canaux de réception (CH$_i$, CH$_j$, CH$_k$) de la combinaison par paire associée à l'entrée respective par-dessus les échos radar (EC) de plusieurs impulsions radar (RP), dans lequel les entrées du conjugué complexe du vecteur propre de la matrice de covariance sont utilisées avec la valeur propre la plus grande en tant que poids en vue de la combinaison des signaux radar numériques (u$_i$, u$_j$, u$_k$) pour l'écho radar (EC) d'une impulsion radar respective (RP) dans une position de distance respective (r), moyennant quoi un signal radar de consigne numérique est obtenu, sur la base duquel les coefficients calibrés de la formation de faisceau numérique (DBF) sont déterminés.

8. Procédé selon la revendication 7, **caractérisé en ce qu'**outre le signal radar de consigne numérique pour chaque canal de réception (CH$_i$, CH$_j$, CH$_k$), un signal corrompu est calculé, dans lequel des ambiguïtés de distance en raison de la réception simultanée d'échos radar (EC) de différentes impulsions radar (RP) sont modélisées par une superposition de copies décalées dans le temps de signaux radar numériques (ui, $u_j$, $u_k$) du canal de réception respectif ($CH_i$, $CH_j$, $CH_k$), dans lequel les coefficients calibrés de la formation de faisceau numérique (DBF) sont des poids d'une somme pondérée des signaux corrompus de tous les canaux de réception ($CH_i$, $CH_j$, $CH_k$) et sont déterminés par le biais d'une optimisation avec l'objectif d'optimisation d'une différence la plus faible possible entre le signal radar de consigne numérique et la somme pondérée.

9. Procédé selon une des revendications 4 à 6, **caractérisé en ce qu'**au moins un ensemble de poids ($a_{ji}$) est calculé pour une position de distance respective (r), dans lequel les poids ($a_{ji}$) d'un ensemble respectif décrivent le rapport relatif des signaux radar numériques (ui, $u_j$, $u_k$) des différents éléments d'antenne (2) du réseau l'un par rapport à l'autre et les coefficients calibrés de la formation de faisceau numérique (DBF) sont déterminés en se basant sur l'au moins un ensemble de poids ($a_{ji}$).

10. Procédé selon une des revendications précédentes, **caractérisé en ce que** le mode de fonctionnement normal du RSO en vue de l'obtention d'images du RSO, pour lequel l'ensemble de paramètres calibrés (wi) est déterminé, utilise des impulsions radar avec une largeur de bande prédéterminée, dans lequel la largeur de bande des impulsions radar (RP) dans le mode de calibrage est inférieure à la largeur de bande prédéterminée.

11. Procédé selon une des revendications précédentes, **caractérisé en ce que** les données radar numérisées ($RD_i$, $RD_j$, $RD_k$) sont transmises de l'objet volant à une station au sol sur la surface terrestre, dans laquelle l'ensemble de paramètres calibrés (wi) est déterminé.

12. Dispositif radar à synthèse d'ouverture pour la télédétection de la surface terrestre (GR), comprenant une installation radar (1, 2) sur un objet volant qui se déplace dans une direction azimutale (x) au-dessus de la surface terrestre (GR) lors du fonctionnement du dispositif radar à synthèse d'ouverture, dans lequel l'installation radar (1, 2) comprend un réseau d'éléments d'antenne (2) pour émettre des impulsions radar (RP) dans le mode d'émission et pour recevoir les échos radar (EC) réfléchis sur la surface terrestre (GR) de ces impulsions radar (RP) dans le mode de réception, dans lequel l'installation radar (1, 2) est configurée de telle sorte que plusieurs échos radar (EC1, EC2, EC3) de différentes impulsions radar (RP1, RP2, RP3) sont reçus simultanément dans un mode de fonctionnement normal du RSO en vue de l'obtention d'images du RSO et sont séparés l'un de l'autre par le biais de formation de faisceau numérique (DBF), dans lequel le dispositif radar à synthèse d'ouverture est configuré pour la réalisation d'un mode de calibrage, dans lequel

- l'émission des impulsions radar (RP) dans le mode d'émission s'effectue avec une fréquence de répétition des impulsions prédéfinie (PRF) de telle sorte que seuls des signaux d'écho d'un écho radar individuel (EC) sont reçus au même instant dans le mode de réception par tous les éléments d'antenne (2) du réseau ;
**caractérisé en ce que**
- les signaux d'écho sont enregistrés dans plusieurs canaux de réception ($CH_i$, $CH_j$, $CH_k$) dans le mode de réception, dans lequel un élément d'antenne différent (2) est associé à un canal de réception respectif ($CH_i$, $CH_j$, $CH_k$) et les signaux d'écho reçus par l'élément d'antenne associé (2) sont numérisés dans le canal de réception respectif ($CH_i$, $CH_j$, $CH_k$) et directement mémorisés indépendamment des autres canaux de réception ($CH_i$, $CH_j$, $CH_k$), moyennant quoi des données radar numérisées ($RD_i$, $RD_j$, $RD_k$) sont obtenues pour chaque canal de réception ($CH_i$, $CH_j$, $CH_k$) ;
- les données radar numérisées ($RD_i$, $RD_j$, $RD_k$) des canaux de réception respectifs ($CH_i$, $CH_j$, $CH_k$) subissent un traitement ultérieur pour déterminer un ensemble de paramètres calibrés (wi) de l'installation radar (1, 2) pour un mode de fonctionnement du RSO en vue de l'obtention d'images du RSO, dans lequel l'ensemble de paramètres calibrés (wi) comprend des coefficients calibrés en vue de la combinaison de signaux d'écho reçus (EC) des éléments d'antenne individuels (2) lors de la formation de faisceau numérique (DBF) dans le mode de fonctionnement normal du RSO en vue de l'obtention d'images du RSO.

13. Dispositif radar à synthèse d'ouverture selon la revendication 12, **caractérisé en ce que** le dispositif radar à synthèse d'ouverture est configuré pour la réalisation d'un procédé selon une des revendications 2 à 11.

14. Procédé d'exploitation d'une installation radar (1, 2), dans lequel l'installation radar (1, 2) réalise le mode d'émission et le mode de réception du procédé de radar à synthèse d'ouverture selon une des revendications 1 à 11.

15. Installation radar, qui est configurée pour la réalisation du procédé selon la revendication 14.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **KRIEGER et al.** CEBRAS: Cross elevation beam range ambiguity suppression for high-resolution wide-swath and MIMO-SAR imaging. *International Geoscience and Remote Sensing Symposium,* 26. Juli 2015, 196-199